# FASCICULE DE BREVET EUROPEEN

(11) **EP 4 005 704 B1**
(45) Date de publication et mention de la délivrance du brevet: **08.01.2025**
(21) Numéro de dépôt: 21209943.6
(22) Date de dépôt: 23.11.2021
(51) Int. Cl.: B22F 10/12, B22F 10/10, B22F 12/00, B22F 12/50, B22F 12/57, B22F 12/55, B22F 12/67, B22F 12/90, B29C 64/124, B29C 64/205, B29C 64/214, B29C 64/236, B29C 64/393, B33Y 10/00, B33Y 30/00, B33Y 50/02, B29C 64/106, B29C 64/165

(54) **MACHINE DE FABRICATION DE PIECES CRUES EN MATERIAU CERAMIQUE OU METALLIQUE**
MASCHINE ZUR HERSTELLUNG VON ROHTEILEN AUS KERAMIK- ODER METALLMATERIAL
MACHINE FOR MANUFACTURING GREEN CERAMIC OR METAL MATERIAL PARTS

(30) Priorité: 26.11.2020 FR 2012228
(43) Date de publication de la demande: 01.06.2022
(73) Titulaire: S.A.S 3DCeram-Sinto, 87270 Bonnac la Cote (FR)
(72) Inventeur: GAIGNON, Richard, 91770 Saint-Vrain (FR); CHAPUT, Christophe, 87410 Le-Palais-sur-Vienne (FR); PASTORA, Jean, 87000 Limoges (FR)
(74) Mandataire: Cabinet Chaillot

(56) Documents cités:
- EP-A2- 1 847 377
- CN-U- 208 343 464
- US-A- 5 902 537
- US-A- 5 922 364
- US-A- 5 980 812

## Description

La présente invention concerne une machine de fabrication de pièces crues en matériau céramique ou métallique par stéréolithographie, de telles pièces crues étant destinées à être soumises à des opérations de nettoyage, déliantage et frittage pour obtenir des pièces céramiques ou métalliques finies.

La stéréolithographie comprend généralement les étapes suivantes, pour l'obtention de ces pièces crues :
- on construit, par conception assistée par ordinateur, un modèle informatique de la pièce à fabriquer, modèle dont les dimensions sont légèrement plus grandes que celles de la pièce à fabriquer afin de prévoir un retrait du matériau céramique ou métallique au cours de la fabrication de la pièce ; et
- on fabrique la pièce de la façon suivante :
   - on forme, sur un support rigide, une première couche d'une composition durcissable comprenant ledit matériau céramique ou métallique formé par au moins une poudre respectivement céramique ou métallique, et une partie organique comportant au moins un monomère et/ou un oligomère et au moins un amorceur de la polymérisation dudit ou desdits monomères et/ou oligomères, et, le cas échéant au moins l'un parmi un plastifiant, un solvant, un dispersant et un inhibiteur de polymérisation,
   - on fait durcir la première couche de la composition photodurcissable par irradiation (par exemple par balayage laser de la surface libre de ladite couche ou par système de projection à diodes) selon un motif défini à partir du modèle pour ladite couche, formant un premier étage ;
   - on forme, sur le premier étage, une seconde couche de la composition durcissable ;
   - on fait durcir la seconde couche de la composition durcissable, par irradiation selon un motif défini pour ladite couche, formant un deuxième étage, cette irradiation s'effectuant comme pour la première couche ;
   - optionnellement, on répète les étapes ci-dessus pour obtenir la pièce à l'état cru.

Ensuite, comme indiqué ci-dessus, pour obtenir la pièce finie, on nettoie la pièce à l'état cru pour enlever la composition non durcie ; on déliante la pièce à l'état cru nettoyée ; et on fritte la pièce à l'état cru nettoyée et déliantée pour obtenir la pièce finie.

La composition durcissable peut se présenter sous la forme d'une suspension. Le support rigide est un plateau de travail supportant les différentes couches de la pièce en cours de construction ainsi que la suspension et l'on forme généralement chacune des couches par abaissement du plateau de travail et étalement d'une épaisseur de suspension prédéfinie. Une réserve de suspension est stockée dans des réservoirs (bacs ou cartouches ou pots sous pression) qui sont automatiquement vidés d'une quantité de suspension prédéfinie à chaque couche. Cela crée un boudin ou bourrelet de suspension à étaler sur la couche supérieure de la pièce en cours de fabrication qui aura été abaissée auparavant par le plateau de travail. Chaque couche est généralement étalée par un racleur qui balaye la surface de travail du plateau de travail, par exemple en avançant suivant une direction horizontale rectiligne.

A chaque formation de couche, le boudin sort de son réservoir pour s'étendre sur la largeur du plateau entre ce dernier et le racleur sur une hauteur calculée pour que ce dernier puisse être recouvert de suspension formant la couche lors de l'avance du racleur.

Ce système n'est pas envisageable pour des machines de grandes dimensions car :
- le boudin de suspension, poussé par le racleur sur toute la longueur du plateau, va heurter les parties polymérisées, parties qui sont fragiles, générant de trop fortes contraintes sur les pièces ;
- il est très difficile de s'assurer d'une hauteur homogène du boudin sur toute sa largeur si bien que le plateau risque de ne pas être correctement couvert, incitant à utiliser une quantité de suspension beaucoup plus que la quantité nécessaire pour éviter ce risque. Des efforts supplémentaires sont ainsi générés.

Il a été proposé par la Société déposante d'amener la suspension par une buse devant le racleur sur toute la largeur de celui-ci. Si cette solution permet de résoudre le problème de la répartition sur la largeur, celui de la répartition sur la longueur reste à résoudre pour les plateaux de grande dimension, l'amenée en continu de suspension lors du déplacement du racleur étant rendue plus compliquée. En effet, si **l'on** arrête le racleur à certains moments pour déposer un nouveau cordon de suspension, des défauts de surface sur les pièces, à savoir des marques à l'endroit des arrêts, sont générés ; et si l'on dépose un cordon de suspension continu devant le racleur, cette opération est difficile à maîtriser sur toute la largeur pendant toute l'avancée du racleur, amenant à déposer de la suspension dans une quantité plus grande que celle nécessaire, générant des efforts supplémentaires.

US 5,980,812 a pour objet un procédé de fabrication de modèles, de moules, de pièces et d'autres objets basé sur l'homogénéisation des composants de la dispersion pour former un alliage qui a des propriétés différentes des propriétés de la dispersion ou de ses composants individuels.

US 5,922,364 a pour objet des systèmes de commande permettant de produire des couches contiguës successives pour former un objet tridimensionnel sur une surface de support de pièce. US 5 902 537 A à pour objet un système de stéréolithographie dans lequel le dispositif d'étalement présente un réservoir externe et un dispositif de formation de vide.

Pour pallier à ces inconvénients, la Société déposante a proposé que l'amenée et l'étalement de suspension sur la surface horizontale de réception pour la première couche et sur chaque couche à motif précédemment durci pour chaque autre couche s'effectue par un système d'applicateur à réserve de suspension alimentée par un réservoir externe, l'empilement de couches s'effectuant dans un bac se remplissant de suspension à chaque formation de couche.

Ainsi, selon l'invention, le dépôt de suspension peut s'effectuer de façon maîtrisée avantageusement sur toute la largeur et toute la longueur des couches sans excès de suspension comme dans les situations précédemment décrites de l'état antérieur de la technique.

Par ailleurs, le remplissage progressif du bac offre des avantages par rapport au cas où l'on travaillerait avec un bac initialement rempli de la suspension dans laquelle on fait descendre pas à pas à chaque formation de couche un plateau qui supporte l'empilement pour recouvrir la couche à motif durci d'une nouvelle couche à irradier. Ces avantages sont ceux **d'éviter** une baisse de réactivité de la suspension par suite **d'un** échange avec la température ambiante, **d'éviter** une sédimentation au fond du bac de la partie céramique ou métallique de la suspension, et d'éviter une contrainte de cisaillement élevée qui serait nécessaire pour abaisser un niveau de viscosité trop élevé de la suspension pour lui permettre de bien assurer le nappage des couches à irradier.

La présente invention a donc pour objet une machine de fabrication de pièces par la technique de stéréolithographie, suivant laquelle des couches de suspension durcissable sous l'action d'un rayonnement sont amenées successivement à durcir chacune l'une au-dessus de l'autre par irradiation selon un motif défini pour chaque couche, ladite machine comportant :
- une surface horizontale de réception, configurée pour recevoir la première couche et les couches ultérieures formées les unes au-dessus des autres à partir de la première couche ;
- un dispositif d'amenée et d'étalement configuré pour, à chaque formation de couche, amener une quantité de suspension et l'étaler sur ladite surface horizontale de réception pour la première couche, et sur chaque couche à motif précédemment durcie pour chacune des couches ultérieures, le dispositif d'amenée et d'étalement et la surface horizontale de réception étant déplaçables l'un par rapport à l'autre selon la direction d'empilement des couches ; et
- un dispositif d'irradiation pour irradier chaque couche une fois étalée pour la faire durcir dans le motif préalablement défini,
caractérisée par le fait que la surface horizontale de réception est constituée par le fond d'un bac, ledit bac ayant une longueur et une largeur, et que ledit dispositif d'amenée et d'étalement comprend un applicateur de suspension et un réservoir externe, l'applicateur de suspension comprenant une réserve de suspension alimentée par le réservoir externe, au moins un dispositif de formation de vide dans la réserve de suspension et au moins un trou relié à la réserve de suspension et formé en regard de la surface horizontale de réception, ledit au moins un dispositif de formation de vide étant commandé pour réguler la quantité de suspension libérée par ledit au moins un trou, l'applicateur de suspension étant disposé selon la largeur du bac et ayant au moins la largeur d'impression et étant configuré pour se déplacer en translation selon la longueur du bac pour être apte à appliquer de la suspension par ledit au moins un trou sur la surface de réception et qu'elle comporte un dispositif de commande de l'apport de suspension à la cavité de réserve de suspension lors du déplacement en translation de l'applicateur.

Conformément à un mode de réalisation particulier de la machine selon l'invention, ledit au moins un dispositif de formation de vide est relié à un piquage de vide pour contrôler la quantité de suspension libérée par ledit au moins un trou.

L'applicateur peut être un parallélépipède rectangle, la face active en regard de la surface horizontale de réception étant la face de largage de l'applicateur dans laquelle est formé ledit au moins un trou.

Ledit au moins un trou formé, qui est formé dans la face active, peut être constitué par une unique fente formée sur toute la largeur de la face active de l'applicateur ou par une pluralité de trous uniformément répartis sur toute la largeur de la face active de l'applicateur.

La suspension peut être apportée à la cavité de réserve par plusieurs alimentations provenant du réservoir externe, uniformément réparties sur la largeur de l'applicateur, des tubes internes de distribution de suspension pouvant être montés plongeant dans la cavité de réserve.

La réserve de suspension peut avantageusement être divisée en compartiments associés chacun à un dispositif de formation de vide par au moins un piquage de vide et à au moins une alimentation en suspension en provenance du réservoir. Ainsi chaque compartiment a un système d'alimentation propre et un système de dépression propre. L'avantage réside dans le fait que si un compartiment se vide de suspension pour une raison quelconque, cela ne perturbe pas les autres. On a aussi constaté que ce montage permettait de mieux contrôler le niveau de la suspension dans l'applicateur de suspension.

L'avantage de l'apport de suspension pendant le déplacement de l'applicateur est de rendre minimale la quantité de suspension devant l'applicateur, laquelle peut induire des phénomènes de contrainte mécanique sur les pièces ou des problèmes de bourrelets lors du durcissement, générant des interférences par la suite avec l'applicateur.

La machine selon l'invention peut comprendre un capteur de quantité de suspension non durcie dans le bac, et un automate régulant pour chaque couche l'apport de suspension par l'applicateur en fonction du niveau de suspension non durcie détecté dans le bac par le capteur de quantité de suspension.

Le capteur de quantité de suspension peut être l'un parmi un capteur de niveau et un capteur de volume.

La face active de l'applicateur peut porter au moins une lame configurée pour permettre un raclage de la suspension déposée par ledit au moins un trou, ladite lame étant située en retrait dudit au moins un trou dans la direction de déplacement de l'applicateur.

La face avant de l'applicateur dans la direction de déplacement peut présenter une forme de bouclier de poussée.

Le bac peut être équipé d'un trop-plein pour évacuer la suspension non durcie en excès. Le trop-plein peut être commandé en fonction du niveau de suspension détecté par le capteur de quantité de suspension non durcie dans le bac.

Pour mieux illustrer l'objet de la présente invention, on va en décrire ci-après, à titre indicatif et non limitatif, un mode de réalisation particulier avec référence au dessin annexé.

Sur ce dessin :
[Fig. 1] est une vue en élévation de face d'un applicateur de suspension d'une machine selon l'invention ;
[Fig. 2] est une vue de dessus du dispositif de la Figure 1 ;
[Fig. 3] est une vue en coupe transversale selon III-III de la Figure 1 ;
[Fig. 4] est une vue en coupe longitudinale selon IV-IV de la Figure 2 ;
[Fig. 5] est une vue de face de l'applicateur de la Figure 1 en place dans la machine selon l'invention ;
[Fig. 6] est une vue schématique illustrant le fonctionnement de la machine selon l'invention.
[Fig. 7a] illustre la formation d'une couche lors de l'avance de l'applicateur de suspension ;
[Fig. 7b] illustre la formation d'une couche vue dans le bac de la machine ;
[Fig. 7c] illustre la formation d'une couche avec ajout de matière supplémentaire ;
[Fig. 7d] illustre la formation d'une couche avec aspiration de matière excédentaire d).
[Fig. 8] est une vue en perspective éclatée d'un applicateur de suspension d'une machine selon l'invention, ledit applicateur étant conforme à une variante de celui représenté sur les Figures 1 à 4.

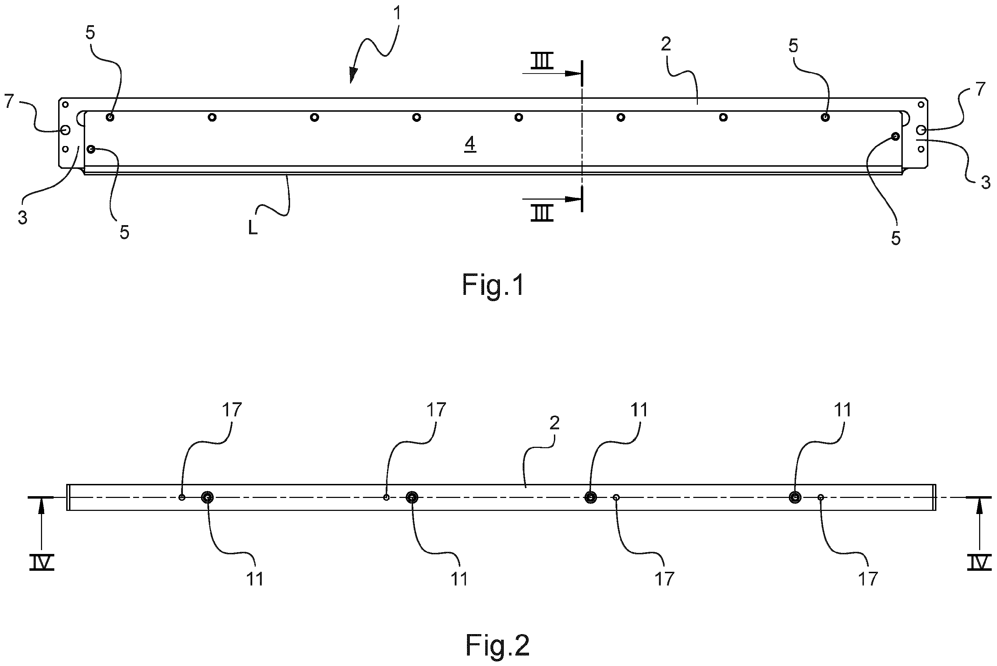

Si l'on se réfère aux Figures 1 à 5, on peut voir que l'on a représenté un applicateur de suspension 1 ayant la forme générale d'un parallélépipède rectangle formé par une plaque supérieure allongée 2, horizontale en position d'utilisation, repliée vers le bas à chacune de ses extrémités pour former des plaques transversales 3 de plus grande épaisseur. Sur chacun des côtés de ces parois 2 et 3, vient se fixer une plaque latérale 4 par des vis 5.

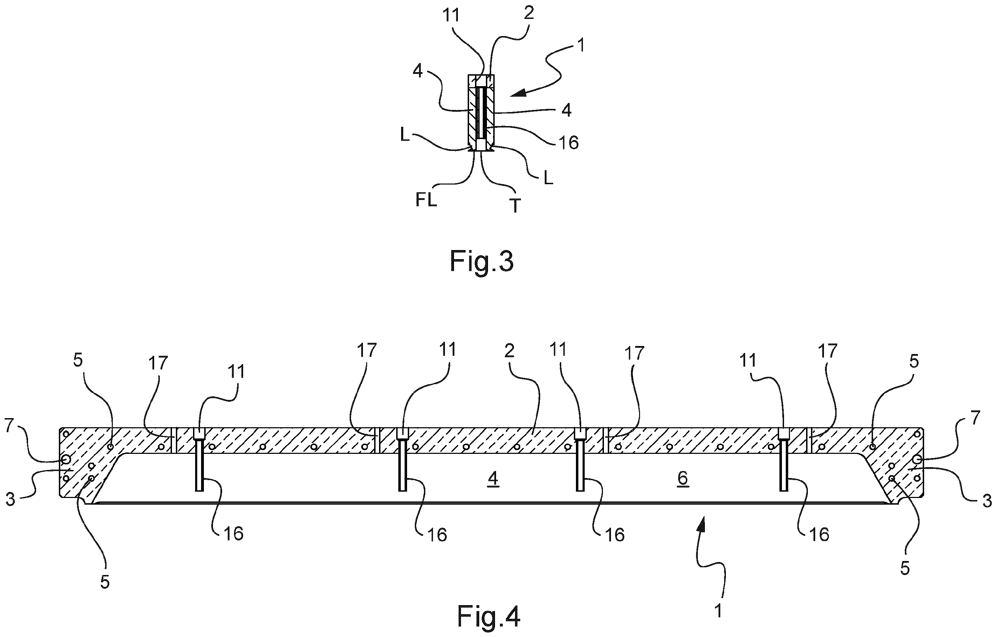

Il est ainsi constitué une réserve de suspension 6 (Fig. 4) délimitée par les plaques 2, 3 et 4, la face inférieure ou face de largage (FL) étant formée par les chants des plaques 3 et 4 et comportant un trou T en forme de fente (voir Fig. 3).

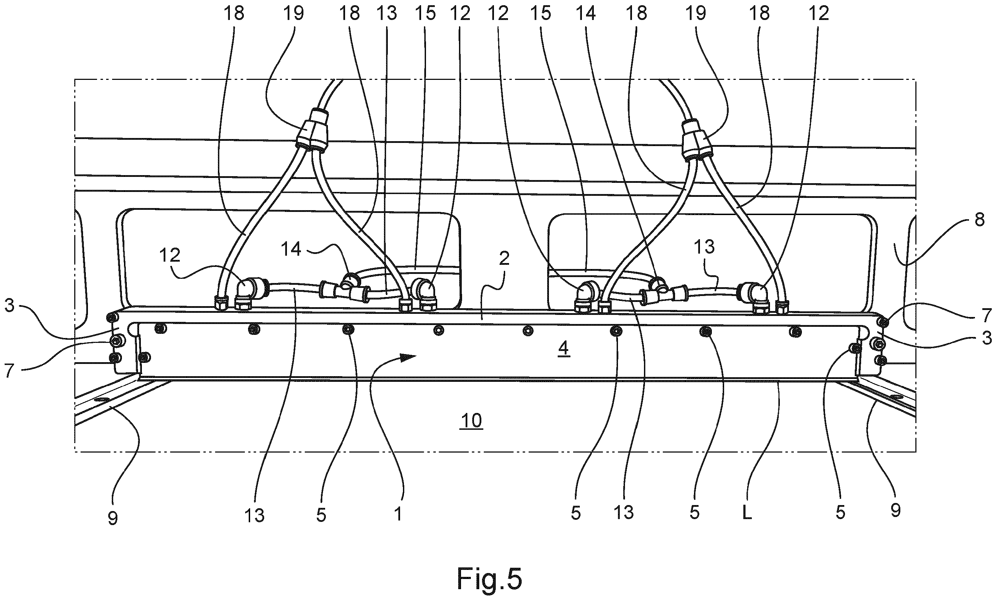

Les plaques transversales 3 comportent des trous 7 pour le passage de vis de fixation sur un porte-applicateur 8. Celui-ci, équipé de son applicateur 1, est monté coulissant sur des rails 9 qui encadrent une surface horizontale de réception 10 (voir Fig. 5).

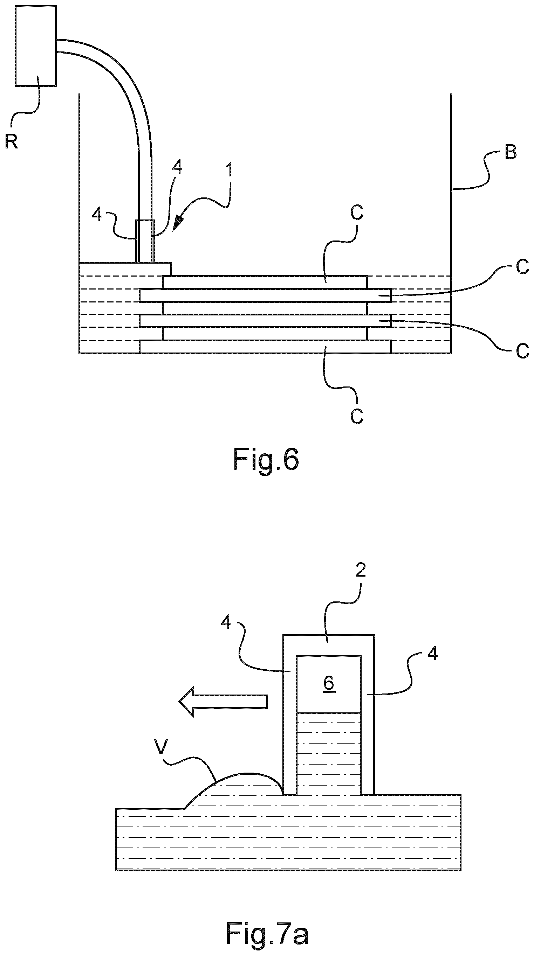

Dans la plaque supérieure 2 sont pratiqués des évidements 11 aptes à recevoir chacun un raccord d'extrémité 12 d'un tuyau 13. Les tuyaux 13 sont reliés à un raccord intermédiaire 14 duquel part un tuyau 15, les deux tuyaux 15 étant réunis à un raccord intermédiaire (non représenté) duquel part un tuyau de liaison à un réservoir de suspension externe (R sur la Fig. 6).

Les évidements 11 sont reliés chacun à un tube interne 16 de distribution de suspension plongeant dans la réserve 6.

L'apport de suspension dans la réserve 6 est commandé par un dispositif (non représenté) qui est programmé pour ouvrir une ou des vannes de distribution pour adresser de la suspension par exemple pendant que l'applicateur 1 est à l'arrêt, en particulier à un bord transversal de la surface de réception.

Dans la plaque 2, sont également pratiqués des piquages de vide 17 reliés deux à deux par des tuyaux 18 à un raccord intermédiaire 19 d'où part une liaison à un dispositif de formation de vide (non représenté).

Chacune des plaques 4 comporte une lame de raclage L le long de sa bordure inférieure dans l'exemple représenté, celle-ci ayant ici la forme d'un bouclier de poussée (Fig. 3). Des détails concernant cette forme peuvent être trouvés dans la demande de brevet français déposé le 8 juillet 2019 au nom du présent demandeur et ayant pour titre « Dispositif d'application de couches de pâte pour un appareil de fabrication de pièces céramiques par stéréolithographie ». D'autres formes de lames de raclage peuvent être utilisées, telles que des lames en biseau, par exemple à fort angle d'entrée (par exemple 45°) ou, si l'on veut favoriser l'écoulement laminaire, à plus petit angle d'entrée.

Dans l'exemple représenté, l'applicateur de suspension comporte deux lames L, chacune d'elles étant active dans l'une des deux directions de déplacement.
La machine selon l'invention fonctionne comme suit :
(a) formation d'une première couche C de suspension dans le fond d'un bac (B) (Fig. 6) par déplacement de l'applicateur 1 dont la réserve 6 a été préalablement remplie à partir du réservoir R ; un vide (dépression) est nécessaire dans cette opération pour éviter tout dépôt non souhaité de suspension et pour réguler ce dépôt ;
(b) durcissement de la première couche selon le motif souhaité ;
(c) remontée de l'applicateur 1 d'une hauteur de couche ;
(d) formation de la deuxième couche C par déplacement de l'applicateur 1 dans la direction opposée ;
(e) durcissement de la deuxième couche C ;
avec la répétition des étapes (c) et (e) pour la construction de la pièce à l'état cru.

La Figure 6 représente une machine selon l'invention dans laquelle l'applicateur 1 remonte à chaque fois de la hauteur d'une couche à partir du fond du bac B.

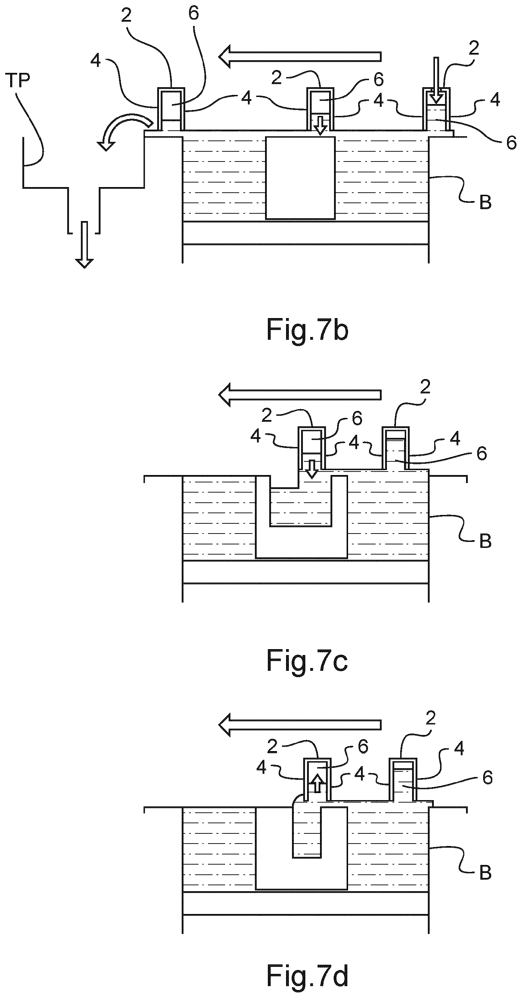

On peut également prévoir que ce soit la surface de travail qui descende comme illustré sur la Figure 7b, 7c ou 7d. En d'autres termes, c'est le fond du bac qui descend à chaque formation de couche.

Si l'on se réfère maintenant à la Figure 7a, on peut voir qu'au fur et à mesure que l'applicateur 1 dépose de la suspension sur la couche précédente qui provient de la réserve de suspension 6, il se forme à l'avant de l'applicateur une vague V qui est raclée par la lame avant.

Si l'on se réfère à la Figure 7b, montrant l'applicateur 1 dans sa position initiale (remplissage de la réserve 6), dans une position intermédiaire (lors du dépôt proprement dit), et dans sa position finale (après le dépôt), on peut voir que l'on a prévu un trop-plein TP sur le bord du bac opposé à la position de départ. La suspension qui tombe dans le trop-plein TP peut avantageusement être renvoyée dans le réservoir externe R.

Si l'on se réfère à la Figure 7c, on peut voir que l'on a représenté la situation dans laquelle le niveau d'une couche précédente dans un emplacement non durci est trop bas par rapport au reste de la couche. Dans ce cas, on commande l'apport de la matière manquante de suspension.

Si l'on se réfère à la Figure 7d, on peut voir que l'on a représenté la situation dans laquelle le niveau d'une couche précédente dans un emplacement non durci est trop haut par rapport au reste de la couche. Dans ce cas, on commande l'aspiration de la matière excédentaire de suspension.

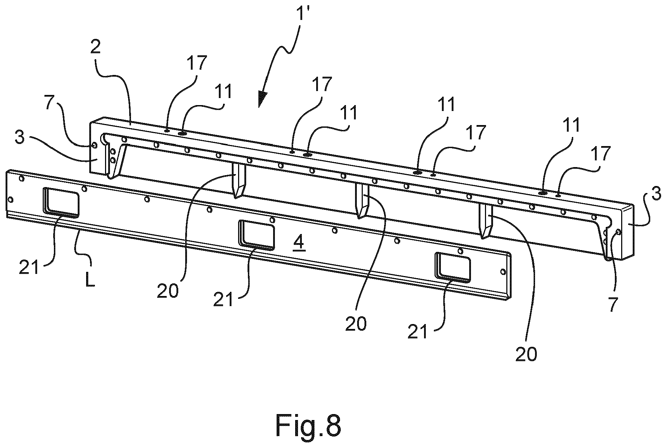

Si l'on se réfère à la Figure 8, on peut voir que l'on a représenté un applicateur 1' qui diffère de l'applicateur 1 par le fait que la réserve de suspension 6 est divisée en compartiments (quatre dans l'exemple représenté) par trois cloisons 20 perpendiculaires à la plaque supérieure 2 et s'étendant vers le bas jusqu'au voisinage de la fente T de sortie de la suspension.

Les éléments de l'applicateur 1' identiques à ceux de l'applicateur 1 sont désignés par les mêmes chiffres de référence.

Les compartiments formés par les cloisons 20 sont sensiblement du même volume et chacun est alimenté en suspension par un tuyau analogue à un tuyau 13 tel que représenté sur la Figure 5, et est relié à un dispositif de formation de vide par un piquage de vide 17.

Dans l'exemple représenté, les cloisons 20 sont biseautées à leur partie inférieure, ce qui permet de faciliter la sortie de suspension à partir de chacun des compartiments.

Sur la Figure 8, n'ont pas été représentés les tubes internes de distribution 16 montés intérieurement dans les évidements 11 recevant un raccord d'extrémité 12 d'un tuyau 13.

Ainsi chaque compartiment a un système d'alimentation et un système de dépression qui lui sont propres, permettant de contrôler l'alimentation et la dépression compartiment par compartiment.

Sur la Figure 8, on a également représenté des fenêtres de contrôle 21 qui peuvent, si on le souhaite, être pratiquées dans la paroi avant 4 pour observer le comportement de la suspension au cours de son dépôt.

## Revendications

1. - Machine de fabrication de pièces par la technique de stéréolithographie, suivant laquelle des couches de suspension durcissable sous l'action d'un rayonnement sont amenées successivement à durcir chacune l'une au-dessus de l'autre par irradiation selon un motif défini pour chaque couche, ladite machine comportant :
- une surface horizontale de réception (10), configurée pour recevoir la première couche et les couches ultérieures formées les unes au-dessus des autres à partir de la première couche ;
- un dispositif d'amenée et d'étalement configuré pour, à chaque formation de couche, amener une quantité de suspension et l'étaler sur ladite surface horizontale de réception (10) pour la première couche, et sur chaque couche à motif précédemment durcie pour chacune des couches ultérieures, le dispositif d'amenée et d'étalement et la surface horizontale de réception (10) étant déplaçables l'un par rapport à l'autre selon la direction d'empilement des couches ; et
- un dispositif d'irradiation pour irradier chaque couche une fois étalée pour la faire durcir dans le motif préalablement défini,
**caractérisée par le fait que** la surface horizontale de réception (10) est constituée par le fond d'un bac (B), ledit bac (B) ayant une longueur et une largeur, et que ledit dispositif d'amenée et d'étalement comprend un applicateur de suspension (1) et un réservoir externe (R), l'applicateur de suspension (1) comprenant une réserve de suspension (6) alimentée par le réservoir externe (R), au moins un dispositif de formation de vide dans la réserve de suspension (6) et au moins un trou (T) relié à la réserve de suspension (6) et formé en regard de la surface horizontale de réception (10), ledit au moins un dispositif de formation de vide étant commandé pour réguler la quantité de suspension libérée par ledit au moins un trou (T), l'applicateur de suspension (1) étant disposé selon la largeur du bac (B) et ayant au moins la largeur d'impression et étant configuré pour se déplacer en translation selon la longueur du bac (B) pour être apte à appliquer de la suspension par ledit au moins un trou (T) sur la surface de réception (10), et qu'elle comporte un dispositif de commande de l'apport de suspension à la cavité de réserve de suspension (6) lors du déplacement en translation de l'applicateur (1).

2. - Machine selon la revendication 1, **caractérisée par le fait que** ledit au moins un dispositif de formation de vide est relié à un piquage de vide (17) pour contrôler la quantité de suspension libérée par ledit au moins un trou (T).

3. - Machine selon l'une des revendications 1 et 2, **caractérisée par le fait que** l'applicateur (1) est un parallélépipède rectangle, la face active en regard de la surface horizontale de réception (10) étant la face de largage (FL) de l'applicateur (1) dans laquelle est formé ledit au moins un trou (T).

4. - Machine selon la revendication **3, caractérisée par le fait que** ledit au moins un trou (T) qui est formé dans la face active est constitué par une unique fente formée sur toute la largeur de la face active de l'applicateur (1) ou par une pluralité de trous uniformément répartis sur toute la largeur de la face active de l'applicateur (1).

5. - Machine selon l'une des revendications 3 et 4, **caractérisée par le fait que** la suspension est apportée à la cavité de réserve (6) par plusieurs alimentations provenant du réservoir externe (R), uniformément réparties sur la largeur de l'applicateur (1), des tubes internes (16) de distribution de suspension pouvant être montés plongeant dans la cavité de réserve.

6. - Machine selon l'une des revendications 1 à 5, **caractérisée par le fait que** la réserve de suspension (6) est divisée en compartiments associés chacun à un dispositif de formation de vide par au moins un piquage (17) de vide et à au moins une alimentation en suspension en provenance du réservoir (R).

7. - Machine selon l'une des revendications 1 à 6, **caractérisée par le fait qu'**elle comprend en outre un capteur de quantité de suspension non durcie dans le bac (B), et un automate régulant pour chaque couche l'apport de suspension par l'applicateur en fonction du niveau de suspension non durcie détecté dans le bac (B) par le capteur de quantité de suspension.

8. - Machine selon la revendication 7, **caractérisé par le fait que** le capteur de quantité de suspension est l'un parmi un capteur de niveau et un capteur de volume.

9. - Machine selon l'une des revendications 4 à 8, **caractérisée par le fait que** la face active de l'applicateur (1) porte au moins une lame (L) configurée pour permettre un raclage de la suspension déposée par ledit au moins un trou (T), ladite lame (L) étant située en retrait dudit au moins un trou (T) dans la direction de déplacement de l'applicateur (1).

10. - Machine selon l'une des revendications 4 à 8, **caractérisée par le fait que** la face avant (4) de l'applicateur (1) dans la direction de déplacement présente une forme de bouclier de poussée.

11. - Machine selon l'une des revendications 1 à 10, **caractérisée par le fait que** le bac (B) est équipé d'un trop-plein pour évacuer la suspension non durcie en excès.

12. - Machine selon la revendication 10 prise en combinaison des revendications 7 à 10, **caractérisée par le fait que** le trop-plein est commandé en fonction du niveau de suspension détecté par le capteur de quantité de suspension non durcie dans le bac (B).

## Patentansprüche

1. - Maschine zur Herstellung von Teilen durch Stereolithographie-Technik, bei der Schichten einer Suspension, die unter der Wirkung einer Strahlung härtbar ist, nacheinander veranlasst werden, jeweils eine über der anderen durch Bestrahlung gemäß einem Muster, das für jede Schicht definiert ist, zu härten, die Maschine umfassend:
- eine horizontale Aufnahmefläche (10), die konfiguriert ist, um die erste Schicht und die nachfolgenden Schichten, die eine über der anderen ausgehend von der ersten Schicht gebildet werden, aufzunehmen;
- eine Zufuhr- und Ausbreitungsvorrichtung, die konfiguriert ist, um bei jeder Schichtbildung eine Menge an Suspension zuzuführen und sie auf der horizontalen Aufnahmefläche (10) für die erste Schicht und für jede nachfolgende Schicht auf jeder zuvor gehärteten gemusterten Schicht auszubreiten, wobei die Zufuhr- und Ausbreitungsvorrichtung und die horizontale Aufnahmefläche (10) in Bezug aufeinander in der Schichtstapelrichtung bewegbar sind; und
- eine Bestrahlungsvorrichtung zum Bestrahlen jeder Schicht, sobald sie ausgebreitet ist, um sie in dem zuvor definierten Muster auszuhärten,
**dadurch gekennzeichnet, dass** die horizontale Aufnahmefläche (10) durch den Boden eines Behälters (B) gebildet ist, wobei der Behälter (B) eine Länge und eine Breite aufweist, und dass die Zufuhr- und Ausbreitungsvorrichtung einen Suspensionsapplikator (1) und ein externes Reservoir (R) umfasst, der Suspensionsapplikator (1) umfassend einen Suspensionsvorrat (6), der von dem externen Reservoir (R) gespeist wird, mindestens eine Vakuumbildungsvorrichtung in dem Suspensionsvorrat (6) und mindestens ein Loch (T), das mit dem Suspensionsvorrat (6) verbunden ist und gegenüber der horizontalen Aufnahmefläche (10) gebildet ist, wobei die mindestens eine Vakuumbildungsvorrichtung gesteuert wird, um die Menge an Suspension zu regulieren, die durch das mindestens eine Loch (T) freigesetzt wird, wobei der Suspensionsapplikator (1) entlang der Breite des Behälters (B) angeordnet ist und mindestens die Druckbreite aufweist und konfiguriert ist, um sich translatorisch entlang der Länge des Behälters (B) zu bewegen, um geeignet zu sein, Suspension durch das mindestens eine Loch (T) auf die Aufnahmefläche (10) aufzutragen, und dass sie eine Steuerungsvorrichtung der Zufuhr an Suspension zu dem Hohlraum des Suspensionsvorrats (6) während der Translationsbewegung des Applikators (1) umfasst.

2. - Maschine nach Anspruch 1, **dadurch gekennzeichnet, dass** die mindestens eine Vakuumbildungsvorrichtung mit einem Vakuumstecher (17) verbunden ist, um die Menge an Suspension zu steuern, die von dem mindestens einen Loch (T) freigesetzt wird.

3. - Maschine nach einem der Ansprüche 1 oder 2, **dadurch gekennzeichnet, dass** der Applikator (1) ein rechteckiges Parallelepiped ist, wobei die aktive Fläche, die der horizontalen Aufnahmefläche (10) zugewandt ist, die Ausstoßfläche (FL) des Applikators (1) ist, in der das mindestens eine Loch (T) gebildet ist.

4. - Maschine nach Anspruch 3, **dadurch gekennzeichnet, dass** das mindestens eine Loch (T), das in der aktiven Fläche gebildet ist, aus einem einzelnen Schlitz besteht, der über die gesamte Breite der aktiven Fläche des Applikators (1) gebildet ist, oder aus einer Vielzahl von Löchern, die gleichförmig über die gesamte Breite der aktiven Fläche des Applikators (1) verteilt sind.

5. - Maschine nach einem der Ansprüche 3 oder 4, **dadurch gekennzeichnet, dass** die Suspension dem Vorratshohlraum (6) durch mehrere Zuführungen, die von dem externen Reservoir (R) herrühren, gleichförmig verteilt über die Breite des Applikators (1) zugeführt wird, wobei innere Suspensionsverteilungsrohre in den Vorratshohlraum eintauchend montierbar sind.

6. - Maschine nach einem der Ansprüche 1 bis 5, **dadurch gekennzeichnet, dass** der Suspensionsvorrat (6) in Fächer unterteilt ist, die jeweils durch mindestens einen Vakuumstecher (17) und mit mindestens einer Suspensionszufuhr, die von dem Reservoir (R) herrührt, mit einer Vakuumbildungsvorrichtung verbunden sind.

7. - Maschine nach einem der Ansprüche 1 bis 6, **dadurch gekennzeichnet, dass** sie ferner einen Sensor für die Menge an nicht ausgehärteter Suspension in dem Behälter (B) und einen Automaten, der für jede Schicht die Zufuhr von Suspension durch den Applikator abhängig von der Höhe der nicht ausgehärteten Suspension, die in dem Behälter (B) durch den Sensor für die Menge an Suspension erfasst wird, reguliert, umfasst.

8. - Maschine nach Anspruch 7, **dadurch gekennzeichnet, dass** der Sensor für die Menge an Suspension einer von einem Füllstandsensor und einem Volumensensor ist.

9. - Maschine nach einem der Ansprüche 4 bis 8, **dadurch gekennzeichnet, dass** die aktive Fläche des Applikators (1) mindestens eine Klinge (L) trägt, die konfiguriert ist, um ein Abstreifen der Suspension zu ermöglichen, die durch das mindestens eine Loch (T) aufgebracht wird, wobei sich die Klinge (L) in der Bewegungsrichtung des Applikators (1) von dem mindestens einen Loch (T) zurückversetzt befindet.

10. - Maschine nach einem der Ansprüche 4 bis 8, **dadurch gekennzeichnet, dass** die Vorderseite (4) des Applikators (1) in der Bewegungsrichtung eine Form eines Schubschilds aufweist.

11. - Maschine nach einem der Ansprüche 1 bis 10, **dadurch gekennzeichnet, dass** der Behälter (B) mit einem Überlauf ausgestattet ist, um überschüssige, nicht ausgehärtete Suspension abzuführen.

12. - Maschine nach Anspruch 10, genommen in Kombination mit den Ansprüchen 7 bis 10, **dadurch gekennzeichnet, dass** der Überlauf abhängig von dem Stand der Suspension gesteuert wird, der durch den Sensor für die Menge an nicht ausgehärteter Suspension in dem Behälter (B) erfasst wird.

## Claims

1. - A machine for manufacturing parts by the stereolithography technique, according to which layers of radiation-curable suspension are successively cured one on top of the other by irradiation according to a pattern defined for each layer, said machine comprising:
- a horizontal receiving surface (10), configured to receive the first layer and subsequent layers formed on top of each other from the first layer;
- a supply and spreading device configured to, at each layer formation, supply a quantity of suspension and spread it on said horizontal receiving surface (10) for the first layer, and on each previously cured patterned layer for each of the subsequent layers, the supply and spreading device and the horizontal receiving surface (10) being movable relative to each other in the direction of layer stacking; and
- an irradiation device for irradiating each layer after it has been spread to cure it in the previously defined pattern,
**characterized in that** the horizontal receiving surface (10) is constituted by the bottom of a vat (B), said vat (B) having a length and a width, and **in that** said supply and spreading device comprises a suspension applicator (1) and an external tank (R), the suspension applicator (1) comprising a suspension reserve (6) fed from the external tank (R), at least one vacuum forming device in the suspension reserve (6) and at least one hole (T) connected to the suspension reserve (6) and formed facing the horizontal receiving surface (10), said at least one vacuum forming device being controlled to regulate the amount of suspension released from said at least one hole (T), the suspension applicator (1) being disposed along the width of the vat (B) and having at least the printing width and being configured to translate along the length of the vat (B) to be able to apply suspension through said at least one hole (T) onto the receiving surface (10), and **in that** it comprises a device for controlling the supply of suspension to the suspension reserve cavity (6) during the translational movement of the applicator (1).

2. - Machine according to claim 1, **characterized in that** said at least one vacuum forming device is connected to a vacuum tapping (17) to control the amount of suspension released from said at least one hole (T).

3. - Machine according to one of claims 1 and 2, **characterized in that** the applicator (1) is a rectangular parallelepiped, the active face facing the horizontal receiving surface (10) being the release face (FL) of the applicator (1) in which said at least one hole (T) is formed.

4. - Machine according to claim 3, **characterized in that** said at least one hole (T) which is formed in the active face is constituted by a single slit formed over the entire width of the active face of the applicator (1) or by a plurality of holes uniformly distributed over the entire width of the active face of the applicator (1).

5. - Machine according to one of claims 3 and 4, **characterized in that** the suspension is supplied to the suspension reserve (6) by several supplies from the external tank (R), uniformly distributed over the width of the applicator (1), internal suspension distribution tubes (16) being able to be mounted dipping into the suspension reserve.

6. - Machine according to one of claims 1 to 5, **characterized in that** the suspension reserve (6) is divided into compartments each associated with a vacuum formation device by at least one vacuum tapping (17) and with at least one supply of suspension from the external tank (R).

7. - Machine according to one of claims 1 to 6, **characterized in that** it also comprises a sensor for the quantity of uncured suspension in the vat (B), and a controller regulating, for each layer, the supply of suspension by the applicator as a function of the level of uncured suspension detected in the vat (B) by the suspension quantity sensor.

8. - Machine according to claim 7, **characterized in that** the suspension quantity sensor is one of a level sensor and a volume sensor.

9. - Machine according to one of claims 4 to 8, **characterized in that** the active face of the applicator (1) carries at least one blade (L) configured to allow scraping of the suspension deposited through the said at least one hole (T), the said blade (L) being located set back from the said at least one hole (T) in the direction of movement of the applicator (1).

10. - Machine according to one of claims 4 to 8, **characterized in that** the front face (4) of the applicator (1) in the direction of movement has the form of a pushing shield.

11. - Machine according to one of claims 1 to 10, **characterized in that** the vat (B) is equipped with an overflow for discharging excess uncured suspension.

12. - Machine according to claim 10 taken in combination with claims 7 to 10, **characterized by** the fact that the overflow is controlled as a function of the level of suspension detected by the sensor of the quantity of uncured suspension in the vat (B).
